# EUROPEAN PATENT SPECIFICATION

(11) **EP 1 127 680 B1**
(45) Date of publication and mention of the grant of the patent: **26.01.2005**
(21) Application number: 01300821.4
(22) Date of filing: 30.01.2001
(51) Int. Cl.: B29D 23/00, F16L 11/08

(54) **Method of making fluorocarbon coated braided hose assemblies**
Verfahren zur Herstellung von gewebten Fluorkohlenstoff ausgekleideten Schlauchanordnungen
Procédé de fabrication d'assemblages de tuyaux tressés et revêtus d'un polymère fluorocarboné

(30) Priority: 31.01.2000 US 494837
(43) Date of publication of application: 29.08.2001
(73) Proprietor: Teleflex Fluid Systems, Inc., Suffield, Connecticut 06078 (US)
(72) Inventor: Mathew, Boney A., Clarkston, Michigan 48348 (US); Martucci, Norman S., Clarkston, Michigan 48348 (US)
(74) Representative: McKechnie, Neil Henry

(56) References cited:
- US-A- 5 381 834
- US-A- 5 655 572
- US-A- 5 974 649

## Description

### CROSS REFERENCE TO RELATED APPLICATIONS

This application is based on earlier US Application United States Serial No. 08/931,018, filed September 15, 1997, which is a continuation of Unites States Serial No. 08/259,343, filed June 14, 1994, which is now abandoned, which is a continuation of United States Serial No. 08/023,417, filed February 23, 1993, which is a continuation-in-part of United States Serial No. 08/764,460, filed September 24, 1991, now abandoned:-

### BACKGROUND OF INVENTION

### 1). Technical Field

The subject invention relates to a method for constructing hose assemblies. More specifically, the subject invention relates to a method for constructing hose assemblies having an inner fluorocarbon liner supported within a glass braided layer. The glass braided layer includes a fluorocarbon polymer coating dispersed therethrough.

### 2). Description of Related Art

Hose assemblies used for carrying fuels are well-known in the art. Such hose assemblies should preferably be strong and resistant to heat and chemical degradation. These hoses are subject to chemical breakdown due to exposure to the various fuels which flow through them. Further, these hoses are typically routed through the engine compartments of vehicles to deliver fuel to the engines. These engines are hot and thus, the hoses used to carry fuels are subject to thermal breakdown from the heat.

TEFLON hoses provide the necessary physical properties for carrying fuels. A major drawback with these types of hoses however, is that when used alone, i.e., only a TEFLON liner or conduit, they tend to become bent during installation resulting in a kink. This kink or deformation remains permanent and provides constant resistance to fluid flow through one hose. To solve this problem, hose assemblies have been constructed which include an inner TEFLON tubular member surrounded by a tightly wound metallic braid. The metallic braid allows the TEFLON inner tubular member to bend to a certain degree without kinking. However, if bent past a certain point, the metallic braid aids in the kinking of the inner tubular member. This type of assembly has three major disadvantages. First, the metallic braid tends to abraid the exterior of the inner tubular member. This causes leaks from the inner tubular member. The second problem is that the exterior metallic braided casing is thermally and electrically conductive. More important is that the metallic braid will retain heat and transfer the heat to the fuel moving through the inner tubular member causing fuel system problems. Finally when used in an automotive environment, the metallic braid transmits noise during operation of the vehicle which is undesirable.

To avoid the problems associated with metallic braided layers, the inner tubular member may be supported within non-metallic braided material. Although the substitution of non-metallic braiding material avoids many problems associated with metallic braiding, several problems exist. First, hose kinking remains a problem due to relative longitudinal movement between the inner tubular member and the braided layer. That is, due to relative slippage between the inner tubular member and the braided layer, the hose assembly is susceptible to kinking. Second, the hose assembly is usually exposed to external heat and chemicals and thus must be resistant to heat and chemical degradation. Most non-metallic braiding materials do not provide the requisite heat or chemical resistant required. Third, hose assemblies generally encounter rough surfaces after installation; that is, they rub against engine components. Accordingly, due to exposure to frictional movement, the hose assembly must be resistant to abrasion.

United States patent number 5,142,782 to Martucci discloses a method for making a coated, braided hose assembly. The method comprises the steps of extruding an inner tubular liner of polymeric fluorocarbon material and subsequently braiding glass fibers about the exterior of the liner. The inner tubular liner and the braided layer are then passed through a reservoir containing an aqueous solution of a fluorocarbon polymer. The solvent water is later removed from the hose assembly, leaving a fluorocarbon polymer coating dispersed throughout the

braided layer.

United States patent number 4,311,547 to Biggs et al discloses a hose assembly including an inner rubber liner having a reinforcement layer braided therearound. A solidifiable liquid polymer is embedded into the interstices of the reinforcement layer so as to bond the inner rubber liner to the reinforcement layer braided thereabout. The solidifiable liquid polymer may comprise plastisol, aldehide, epoxy, or isocyanate resins. A cover layer may be disposed about the reinforcement layer and bonded thereto by the solidifiable liquid polymer. The cover layer may comprise the same material as that which unites the reinforcement layer and inner liner, that is, in addition to bonding the inner rubber liner to the reinforcement layer, the solidifiable liquid polymer may also act as the cover layer. Although the solidifiable liquid polymer does in fact bond the inner liner to the reinforcement layer disposed thereabout, it does not sufficiently resist abrasion, and heat and chemical degradation.

United States patent number 4,215,384 to Elson discloses a hose construction and method for making the same. The hose assembly includes an inner organic polymeric liner having a braided material disposed thereover. The assembly further includes an outer coating of an organic polymeric material. A conductive strip is disposed within the inner tubular liner for conducting electrical charges throughout the interior of the liner. The assembly further includes end fittings on each end of the inner liner for allowing fluid to be conducted therethrough.

United States patent number 4,007,070 to Busdiecker discloses a hose construction having an inner polymeric liner. The liner has a braided layer disposed thereover. An outer protective layer constructed from an organic polymeric material is disposed about the exterior of the braided layer. The Busdiecker '070 patent discloses the use of an adhesive to bond the inner liner to the braided material. The adhesive also coats the braided material for securing the braided material to an outer protective layer.

United States patent number 4,394,705 to Blachman discloses a hose assembly including an inner fluorocarbon liner including a reinforcing braided layer disposed thereabout. A cover layer having chemical and abrasion resistant properties is disposed about the braided layer thus protecting the inner liner and braided layer.

United States Patent Numbers 5,974,649 and 5,655,572 to Marena disclose hose assemblies including a tubular inner liner of a polymeric fluorocarbon material, a reinforcing layer disposed about the inner liner, an outer fluorocarbon coating dispersed throughout the reinforcing layer, a second dispersion including a fluorocarbon polymer material applied over the reinforcing layer for bonding, and a metallic reinforcing layer disposed about the reinforcing layer for increasing the strength and bending properties.

The above-cited documents of prior art provide a method for making a coated, braided hose assembly. Further development has determined that in order to conform the coating of the braid to the fluorocarbon tube, additional steps need to be taken. For example, pre-coating of the tube with a fluorocarbon tube with a fluorocarbon emulsion is desirable. However the emulsion, which is waterbased, tends to bead up on the tube thereby providing a non-uniform layer.

The present invention provides a method for solving the aforementioned problem and providing an improved coated, braided hose assembly.

### SUMMARY OF INVENTION AND ADVANTAGES

The present invention in its first aspect is a method for constructing a hose assembly comprising the steps of: providing an inner tubular liner of a fluorocarbon polymer; applying a dispersion including a fluorocarbon polymer material over the inner tubular liner; positioning a braided layer about the exterior of the inner tubular liner; and applying a second dispersion including a fluorocarbon polymer material therein to the braided layer and the inner tubular liner which bonds to the inner tubular liner and first applied dispersion. The method is characterised in that the first and second dispersions have a different composition. In one embodiment, at least one of the dispersions includes a surfactant. The present invention in its second aspect is a hose assembly according to Claim 2.

An advantage of applying a dispersion having a fluorocarbon polymer material therein is realized by the resulting hose assembly's resistance to heat and abrasion degradation.

An advantage of applying a surfactant to the hose assembly is realized by a more even distribution of the dispersion throughout the braided layer and about the inner tubular liner. This results in a stronger bond between the inner tubular liner and the braided layer disposed thereabout. Thus, the hose assembly is more resistant to kinking. Additionally, due to the more even distribution of the dispersion, the resulting hose assembly is more resistant to abrasion and heat chemical degradation.

### BRIEF DESCRIPTION OF THE DRAWINGS

Other advantages of the subject invention will be readily appreciated when the same becomes better understood by reference to the following detailed description when considered in connection with the accompanying drawings wherein:
FIGURE 1 is a perspective view of the preferred embodiment of the subject invention;
FIGURE 2 is a side view partially broken away of the preferred embodiment of the subject invention including a coupler member;
FIGURE 3 is a side view partially broken away of the preferred embodiment of the subject invention including an alternative coupling member; and
FIGURE 4 is an enlarged cross-sectional view of a hose assembly.

### DETAILED DESCRIPTION OF THE PREFERRED EMBODIMENT

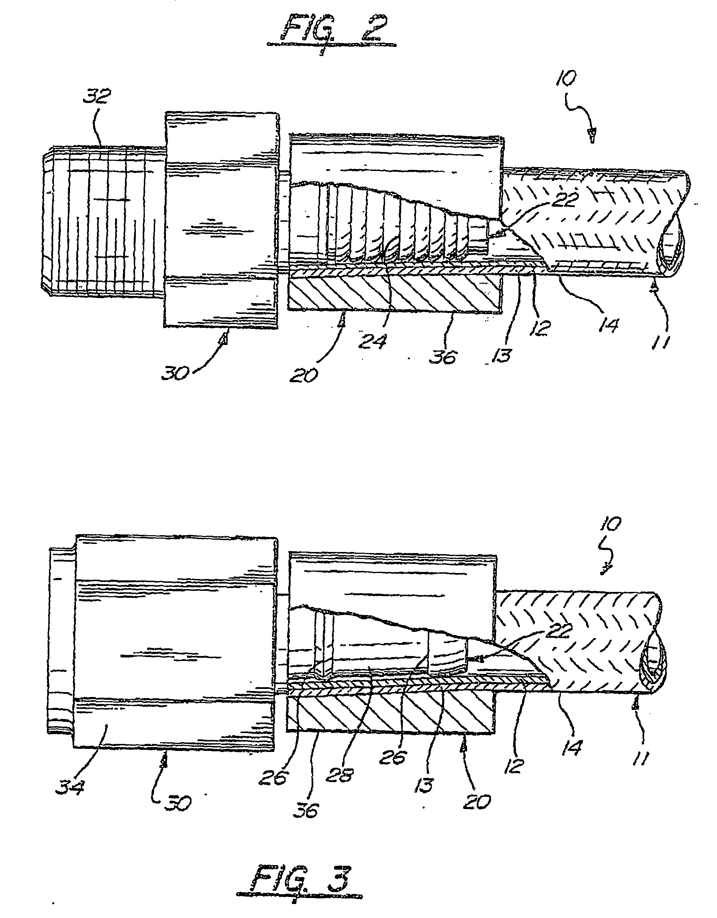

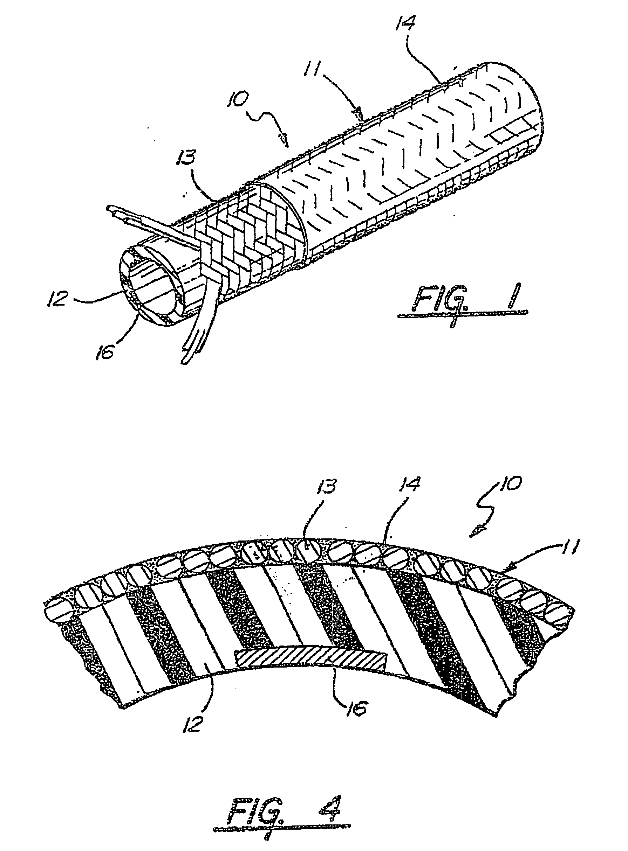

A hose assembly, made in accordance with the subject invention is generally shown at 10 in the Figures. The assembly 10 includes a tubular member generally indicated at 11 and coupling means, generally indicated at 20 (as best viewed in Figures 2 and 3), for connecting the ends of the tubular member 11 to fittings for conducting fluid therethrough.

The tubular member 11 includes an inner organic, polymeric liner 12. The liner 12 is preferably extruded and has a wall thickness between 0.001 and 0.120 inches (0.0254 and 3.048 mm). The inner liner 12 is preferably made of a fluorocarbon polymer. Specifically, the inner liner is preferably made from the polymer of terafluoroethylene (PTFE), the polymer of fluorinated ethylene propylene (FEP), the polymer of perfluoroalkoxy resin (PFA), or the polymer of ethylene-tetrafluoroethylene (ETFE). The fluorocarbon polymers PTFE, FEP, and PFA are sold under the trademark TEFLON by DuPont. The polymer ETFE is sold under the trademark TEFZEL by DuPont.

The inner liner 12 is impervious to fluid flow through the wall. Since the inner liner 12 is preferably made of a fluorocarbon polymer material, it is resistant to both heat and chemical degradation. This allows a variety of fluids, particularly vehicle fuels, to pass through the interior of the liner 12 without corroding the liner 12.

The assembly 10 further includes a braided or woven layer 13 disposed about the exterior of the inner liner 12. The braided layer 13 is a single braided layer in the assembly 10. The braided or woven layer 13 can comprise any non-metallic material disposed in interleaving fashion or wrapped tightly about the inner liner 12. Preferably, the material used for the braided layer 13 is a glass fiber. Glass fibers provide the hose assembly 10 with the necessary strength. Further, glass fibers are heat resistant which is important for hose applications in heated environments and for making the subject hose assembly as will be described subsequently.

The braided or woven fibers may be tightly wound or they may be loosely wound about the inner liner 12, having wide gaps between adjacent fibers. In the preferred embodiment, the glass fibers are tightly woven such that the gaps or spaces between adjacent fibers is minimal. The braided layer 13 adds to the strength of the inner liner 12. Particularly, by using a braided layer 13, the working pressure of the inner liner 12 is increased, allowing a higher pressure of fluid to flow through the inner liner 12. Further, the braided layer 13 adds to the tensile strength of the hose assembly 10. When coupling members 20 are disposed on the ends of the tubular member 11, as will be described subsequently, the braided layer 13 increases the tensile strength of the hose assembly 10 sufficiently to fixedly connect any type of coupling member 20 to the tubular member 11. Finally, the braided layer adds to the hoop strength of the inner liner 12.

The assembly 10 further includes a fluorocarbon polymer coating 14 dispersed throughout the braided layer 13 and about the inner liner 12. That is, the coating 14 is distributed within the interstices of the braided layer 13 forming a single layer therewith. The coating 14 is located from the outer periphery of the braided layer 13 radially inward toward the inner liner 12 (best shown at Figure 4). Preferably, the fluorocarbon polymer coating 14 is one of the following: the polymer of tetrafluoroethylene (PTFE), the polymer of fluorinated ethylene propylene (FEP), the polymer of perfluoroalkoxy resin (PFA), or the polymer of ethylene-tetrafluoroethylene (ETFE). Due to the properties of the fluorocarbon polymer material, the coating 14 provides the hose assembly 10 with the necessary resistance to both heat and chemical degradation while also bonding the braided layer 13 to the inner liner 12.

The coating 14 covers or coats the glass fibers of the braided layer 13. That is, the coating 14 covers the fibers of the braided layer 13 from the outer periphery radially inwardly. The coating 14, therefore, does not extend radially outward from the outer periphery of the braided layer 13. After the material has been coated, each fiber is discernable. In effect, what results is a coating 14 having braided layer 13 therein.

The coating 14 is preferably formed by first braiding or wrapping the braided material 13 abut the exterior of the inner liner 12. A dispersion containing a fluorocarbon polymer material, carrying agent, and surfactant therein, is then dispersed throughout the braided layer 13 from the outer periphery of the braided layer 13 radially inward toward the inner liner 12. The dispersion preferably comprises 50-60% solid fluorocarbon material (in fine granules or particles), preferably from one of the following: the polymer of tetrafluoroethylene (PTFE), the polymer of fluorinated ethylene propylene (FEP), the polymer of perfluoroalkoxy resin (PFA), or the polymer of ethylene-tetrafluoroethylene (ETFE). The dispersion preferably comprises 40-50% carrying agent. The carrying agent carries the solid fluorocarbon material through and about the braided layer 13. The preferred carrying agent is water, but other suitable carrying agents may be used. In order to keep the fluorocarbon material intermixed with the carrying agent and not from settling out between 0.1-10% by weight surfactant is preferably added to the dispersion. Although many surfactants may be used, such as FLUORAD FLUOROCHEMICAL FC171 (liquid) and FLUORAD FLUOROCHEMICAL FC143 (powder), sold by 3M, SILWETT 77 sold by Union Carbide has been found to work especially well.

The fluorocarbon polymer dispersion coats or is dispersed throughout the entire braided layer 13. Specifically, the fluorocarbon polymer dispersion effectively coats each of the glass fibers from the outer periphery radially inward. That is, the glass fibers are coated such that any gap between adjacent fibers will be filled with the dispersion. Also, the outer periphery of each fiber is completed coated. The carrying agent and the surfactant are them removed from the dispersion by drying (heating) the hose assembly thereby leaving the fluorocarbon polymer material dispersed throughout the braided layer 13. The assembly is subsequently sintered to cure the fluorocarbon polymer material dispersed throughout the braided layer into a coating 14.

As previously stated, both the inner liner 12 and coating 14 are preferably fluorocarbon polymers. It is, however, not necessary that both the inner liner 12 and the coating 14 be of the same fluorocarbon polymer, although they may be. For example, the inner liner 12 may be made of PFA while the coating 14 is made of PFTE. Any combination of the fluorocarbon polymers previously listed may be utilized for the inner liner 12 and coating 14.

The coating 14 acts an adhesive to bond the braided layer 13 to the inner liner 12, thus, prohibiting slippage therebetween. Accordingly, the coating 14, in conjunction with the braided layer 13, allows the liner 12 to be bent without kinking. That is, the coating 14, dispersed throughout the braided layer 13, provides strength to the inner liner 12 upon bending. This is commonly referred to as hoop strength. Thus, by using polymeric coating 14, dispersed throughout the braided layer 13, a trim profile assembly is produced which results in the hoop strength of the tubular member 11 being increased so that the hose assembly 10 can be bent without kinking the inner the liner 12. Further, the outer coating 14 adds to the working pressure of the hose. That is, the coating 14 provides strength and allows the inner liner 12 to accommodate a fluid under pressure. Also, the coating 14, due to the inherent properties of the polymeric fluorocarbon materials therein hinders abrasion of the tubular member. Said another way, the coating 14 aids in the abrasion-resistance of the tubular member 11 and braided layer 13. Because the coating is continuous about the outer periphery of the braided layer 13, the braided layer is not subject to abrasion.

It is important that the dispersion be uniformly distributed about the braided layer 13 and about the inner liner 12 to ensure a secure bond between the inner liner 12 and the braided layer 13, while additionally offering the hose assembly sufficient protection against heat and chemical degradation and abrasion. The additional of the surfactant or wetting agents ensures proper distribution of the dispersion. Uniform distribution of the dispersion is of a particular concern when dealing with a solid fluorocarbon material and a liquid carrying agent dispersion due to fluorocarbon materials general lack of affinity for other materials. That is, due to the inertness of fluorocarbon polymers, they tend not to spread evenly throughout the braided layer 13 and about the inner liner 12. Additionally, solid fluorocarbon materials tend to settle out from liquid which they may be mixed with. Thus, the use of surfactants are paramount in the distribution of dispersions throughout the braided layer 13 and the about inner liner 12.

The assembly 10 further includes coupling means generally indicated at 20. The coupling means is for connecting the assembly 10 to a fitting (not shown). The fitting is adapted to cooperate with the coupling means 20. Specifically the coupling means 20 comprises a coupling assembly 20. The coupling assembly 20 includes an insert portion, generally indicated at 22 for inserting into and engaging the interior of inner liner 12. The insert portion 22 may have a plurality of barbs 24 for engaging the interior of the inner liner 12 (as best shown in Figure 2). Alternatively, the insert portion may have a pair of annular ridges 26 and a smooth portion 28 therebetween, as best viewed in Figure 3. The coupling assembly 20 further includes an engaging portion generally indicated at 30 extending longitudinally from the insert portion. The engaging portion is for engaging a fitting (not shown) and is adapted to cooperate therewith. The engaging portion 30 may comprise a male threaded member 32 (Figure 2) or a female member 34 (Figure 3). The engaging portion 30 may also comprise any configuration adapted to cooperate with a member to which it will be fixed. For example, the engaging portion 30 may comprise a socket to receive a mating ball joint. Finally, the coupling assembly 20 includes a locking collar 36. The locking collar 36 is disposed about the exterior of the outer coating 14 and is slid over the insert portion 22 of the coupling assembly 20. In this manner, the inner liner 12 is forced into tight frictional engagement with the insert portion 22 to prevent relative axial movement between the inner liner 12 and the insert portion 22. The coupling assembly 20 can be of any other well-known type. For example, the coupling assembly 20 may be of an organic polymeric material and may be molded about the tubular member 11 for a mechanical connection or fusion bond.

As fluid flows through the inner liner 12, electrical charges tend to build throughout the length of the inner liner 12. In order to prevent these electrical charges from accumulating, the inner liner 12 has an integral longitudinal conductive means coextensive with the length of the inner liner 12 for conducting an electrical charge along the liner 12. Preferably, the inner liner 12 has a conductive strip 16 of carbon black. The carbon black is electrically conductive and will dissipate any electrical charge build up by the fluid. Alternatively, the whole inner liner 12 can comprise the conductive means. This is done by using carbon black about the entire inner liner 12.

The braided layer 13 and coating 14 are preferably, electrically non-conductive. This is important in that electrical charges applied to the exterior of the coating 14 will not be conducted throughout the length of the tubular member 11 or to the fluid passing through the interior of the inner liner 12. It will be appreciated that other conductive material may be used to form the conductive strip 16.

The preferred method for making a hose assembly 10 as shown is as follows. An inner organic polymeric tubular member 12 is provided. Specifically, the inner tubular member 12 of a fluorocarbon polymer is extruded. A dispersion containing fluorocarbon polymeric material, curing agent, and surfactant therein is initially applied over the tubular member. The surfactant causes the dispersion to evenly coat the outer surface of the tubular member 12. A non-metallic or wound material (preferably glass fiber) is then braided or wound about the exterior of the inner liner 12 to form a braided layer 13. The assembly is then dipped a second time in an emulsion of a fluorocarbon polymeric material and curing agent, (with or without surfactant therein) which flows through the gaps in the braid and attaches to the previously applied inner layer and tubular member 12.

An alternative method is as follows. The non-metallic or wound material is braided and wound about the exterior of the inner liner 12 directly to form a braided layer 13.

The first and second dispersions or coatings are made of different materials. This process allows for great flexibility in product design and adds various device functionalities and cost savings. For example, a first dispersion or coating can be used which promotes highly efficient bonding which is initially applied over the tubular member 12. Upon binding a braided or wound material 13 around the tubular member 12 and upon sufficient bonding of the two, the assembly is then dipped a second time into a different emulsion or coating. The emulsion or coating again can flow through any gaps in the braid and can attach to the previously applied dispersion on the tubular member 12. Preferably, the outer layer can be applied for its use in resistance to abrasion, flexibility, UV resistance, add a different color to the hose assembly 10 to provide any additional property required for the specific hose assembly 10.

Typical pairs of coatings are:
(a) a first dispersion including high solids and a second, less expensive, dispersion with lower solids;
(b) a first dispersion for adhesive property and a second dispersion for anti-abrasive property;
(c) a first layer for adhesive property and a second layer for adding a preferred color.

Examples of the specific types of dispersion or coatings include the following: silicone, polyester, PPS, TFE, amides, aramids, fluorocarbon polymers, paint and polyamides. These coatings and additives can be used for specific purposes such as affording resistance to abrasion so long as the coating or additive is able to survive further processing steps, consideration must be made for temperature, reaction with other reagents, coatings and braid as well as end use considerations. This list is not meant to be exhaustive but instead is meant to provide examples of some coatings and additives which can be used in the present invention. Other coatings or additives which are known to those of skill in the art can be used so long as these additives or coatings are able to survive further processing.

A dispersion containing a fluorocarbon polymer material, carrying agent, and surfactant therein is then applied throughout the braided layer 13 from the outer periphery radially inwardly toward the inner liner 12.
Specifically, the inner liner 12 and braided material 13 are passed through a reservoir containing the dispersion. Alternatively, the dispersion may be sprayed onto the braided material. Although it is preferred that the dispersion contains the surfactant therein, the surfactant may be absent. If such is the case, the surfactant needs to be applied to the assembly by dipping the assembly in a reservoir containing surfactant or spraying the surfactant directly thereon. Preferably, the surfactant would be applied to the hose assembly prior to applying the polymeric fluorocarbon dispersion to the hose assembly. That is, regardless of whether the dispersion contain the surfactant therein, surfactant may be applied to the hose assembly prior to applying the dispersion thereto. For example, the inner tubular liner 12 may be dipped into a reservoir prior to positioning the braided layer thereabout.

Preferably, the dispersion is an aqueous one including a fluorocarbon polymer material therein. Because the dispersion is preferably aqueous, the preferred carrying agent is water. The dispersion is applied throughout the entire braided layer 13 and about the inner liner 12, the carrying agent and surfactant are them removed from the dispersion. Specifically, the assembly 10 is sent to a dryer (a preheated oven) which is preferably below the boiling temperature of the carrying agent (e.g., for water, below 100°C (212°F)). By utilizing an oven at a temperature below the boiling temperature of the carrying agent, a bubbling effect is avoided in the final product. The temperature can be above boiling temperature, however, the assembly 10 may contain many air bubbles in the coating 14 if higher temperatures are used. Subsequently, the surfactant is removed from the dispersion by heating the assembly 10 as discussed above. Generally, higher temperatures are required to remove the surfactant that those required to remove the carrying agent i.e., usually 232-302°C (450-575°F). Thus, once the carrying agent and surfactant are removed from the dispersion, the fluorocarbon material is left dispersed throughout the braided material 13 and about the inner liner 12. The assembly 10 is then sintered at a suitable temperature (roughly 371°C (700°F)) to cure the fluorocarbon polymer material into a coating 14. Because glass fibers are used for the braided layer 13, the braided layer 13 is unaffected by the heat required to sinter the assembly 10. Finally, a coupling member 20 may be secured on one or both ends of the tubular member 11 to secure the assembly 10 to a fitting (not shown) for conducting fluid through the inner liner 12.

## Claims

1. A method for constructing a hose assembly comprising the steps of:
providing an inner tubular liner (12) of a fluorocarbon polymer;
applying a first dispersion including a fluorocarbon polymer material and a surfactant therein over the inner tubular liner (12);
positioning a braided layer (13) about the exterior of the inner tubular liner (12) and over the first applied dispersion; and
applying a second dispersion including a fluorocarbon polymer material (14) therein to the braided layer (13) and the inner tubular liner (12) which bonds to the inner tubular liner (12) and
first applied dispersion:
the method being **characterised in that** the first and second dispersions have a different composition.

2. A hose assembly comprising:
an inner tubular liner (12) of a fluorocarbon polymer;
a first dispersion comprising a fluorocarbon polymer material applied to said inner liner (12);
a braided layer (13) positioned about the inner liner (12) whereby said first dispersion prevents relative movement of the braided layer (13) to the inner liner (12); and
a second dispersion comprising a fluorocarbon polymer material applied to said braided layer (13):
**characterised in that** the first and second dispersions have a different composition.

3. The hose assembly according to claim 2, wherein said first dispersion is selected from the group consisting of a fluorocarbon polymer, silicone, and other dispersions capable of bonding the braided layer to the inner liner.

4. The hose assembly according to Claim 2 or Claim 3, wherein said second dispersion is selected from the group consisting of a fluorocarbon polymer, silicone, polyester, polyamides, PPS, paint and other dispersions capable of providing additional function to the hose assembly.

5. The hose assembly according to any one of Claims 2 to 4, wherein said first dispersion comprises fluorocarbon polymer material and a surfactant.

6. The hose assembly according to any one of Claims 2 to 5, wherein said first dispersion further includes at least one curing agent.

## Patentansprüche

1. Verfahren zum Herstellen einer Schlauchanordnung, umfassend die folgenden Schritte:
Bereitstellen einer inneren röhrenförmigen Auskleidung (12) aus einem Fluorkohlenstoffpolymer,
Aufbringen einer ersten Dispersion mit einem Fluorkohlenstoffpolymermaterial und einem Tensid in ihr auf die innere röhrenförmige Auskleidung (12),
Legen einer Geflechtschicht (13) um das Äußere der inneren röhrenförmigen Auskleidung (12) und auf die erste aufgebrachte Dispersion und
Aufbringen einer zweiten Dispersion mit einem Fluorkohlenstoffpolymermaterial (14) in ihr auf die Geflechtschicht (13) und die innere röhrenförmige Auskleidung (12), die mit der inneren röhrenförmigen Auskleidung (12) und der ersten aufgebrachten Dispersion verbunden wird:
wobei das Verfahren **dadurch gekennzeichnet ist, dass** die erste und die zweite Dispersion voneinander verschiedene Zusammensetzungen haben.

2. Schlauchanordnung, umfassend:
eine innere röhrenförmige Auskleidung (12) aus einem Fluorkohlenstoffpolymer,
eine erste Dispersion, umfassend ein auf die genannte innere Auskleidung (12) aufgebrachtes Fluorkohlenstoffpolymermaterial,
eine Geflechtschicht (13), die um die innere Auskleidung (12) herum gelegt ist, wodurch die genannte erste Dispersion die Bewegung der Geflechtschicht (13) relativ zur inneren Auskleidung (12) verhindert, und
eine zweite Dispersion, umfassend ein auf die genannte Geflechtschicht (13) aufgebrachtes luorkohlenstoffpolymermaterial:
**dadurch gekennzeichnet, dass** die erste und die zweite Dispersion voneinander verschiedene Zusammensetzungen haben.

3. Schlauchanordnung nach Anspruch 2, bei der die genannte erste Dispersion aus der Gruppe bestehend aus einem Fluorkohlenstoffpolymer, Silikon und anderen Dispersionen, die zum Verbinden der Geflechtschicht mit der inneren Auskleidung fähig sind, ausgewählt ist.

4. Schlauchanordnung nach Anspruch 2 oder Anspruch 3, bei der die genannte zweite Dispersion aus der Gruppe bestehend aus einem Fluorkohlenstoffpolymer, Silikon, Polyester, Polyamiden, PPS, Anstrichstoff und anderen Dispersionen, die der Schlauchanordnung eine zusätzliche Funktion verleihen können, ausgewählt ist.

5. Schlauchanordnung nach einem der Ansprüche 2 bis 4, bei der die genannte erste Dispersion Fluorkohlenstoffpolymermaterial und ein Tensid umfasst.

6. Schlauchanordnung nach einem der Ansprüche 2 bis 5, bei der die genannte erste Dispersion ferner wenigstens ein Härtungsmittel enthält.

## Revendications

1. Procédé de construction d'un ensemble formant tuyau flexible comprenant les étapes suivantes :
l'apport d'une chemise tubulaire interne (12) en un polymère fluorocarboné ;
l'application d'une première dispersion incluant un matériau polymère fluorocarboné et un agent de surface dans celle-ci sur la chemise tubulaire interne (12) ;
le placement d'une couche tressée (13) à l'extérieur de la chemise tubulaire interne (12) et sur la première dispersion appliquée, et
l'application d'une deuxième dispersion incluant un matériau polymère fluorocarboné (14) dans celle-ci sur la couche tressée (13) et la chemise tubulaire interne (12) qui se lie à la chemise tubulaire interne (12) et à la première dispersion appliquée ;
le procédé étant **caractérisé en ce que** la première et la deuxième dispersions sont de composition différente.

2. Ensemble formant tuyau flexible comprenant :
une chemise tubulaire interne (12) en un polymère fluorocarboné ;
une première dispersion comprenant un matériau polymère fluorocarboné appliqué sur ladite chemise interne (12) ;
une couche tressée (13) placée au niveau de la chemise interne (12) de sorte que ladite première dispersion empêche le déplacement relatif de la couche tressée (13) par rapport à la chemise interne (12), et
une deuxième dispersion comprenant un matériau polymère fluorocarboné appliqué sur ladite couche tressée (13) ;
**caractérisé en ce que** la première et la deuxième dispersions sont de composition différente.

3. Ensemble formant tuyau flexible suivant la revendication 2, dans lequel ladite première dispersion est choisie parmi le groupe comprenant un polymère fluorocarboné, la silicone et d'autres dispersions capables de lier la couche tressée à la chemise interne.

4. Ensemble formant tuyau flexible suivant la revendication 2 ou 3, dans lequel ladite deuxième dispersion est choisie parmi le groupe comprenant un polymère fluorocarboné, la silicone, le polyester, les polyamides, le pps, la peinture et d'autres dispersions capables de conférer une fonction supplémentaire à l'ensemble formant tuyau flexible.

5. Ensemble formant tuyau flexible suivant l'une quelconque des revendications 2 à 4, dans lequel ladite première dispersion comprend un matériau polymère fluorocarboné et un agent de surface.

6. Ensemble formant tuyau flexible suivant l'une quelconque des revendications 2 à 5, dans lequel ladite première dispersion comprend en outre au moins un agent de durcissement.
